# EUROPÄISCHE PATENTSCHRIFT

(11) **EP 1 477 347 B1**
(45) Veröffentlichungstag und Bekanntmachung des Hinweises auf die Patenterteilung: **03.10.2007**
(21) Anmeldenummer: 04011504.0
(22) Anmeldetag: 14.05.2004
(51) Int. Cl.: B60H 1/00, B60H 1/34

(54) **Belüftungsvorrichtung, insbesondere zur Belüftung eines Innenraums**
Ventilating device particularly for ventilating an interior
Dispositif de ventilation, en particulier pour la ventilation d'un intérieur

(30) Priorität: 16.05.2003 DE 10322456
(43) Veröffentlichungstag der Anmeldung: 17.11.2004
(73) Patentinhaber: Behr GmbH & Co. KG, 70469 Stuttgart (DE)
(72) Erfinder: Grömmer, Christian, 88719 Stetten bei Meersburg (DE)
(74) Vertreter: Grauel, Andreas

(56) Entgegenhaltungen:
- EP-A- 0 368 017
- EP-A- 0 596 446
- EP-A- 0 672 551
- WO-A-01/66371

## Beschreibung

Die Erfindung betrifft eine Belüftungsvorrichtung, insbesondere zur Belüftung eines Innenraums, vorzugsweise eines Kraftfahrzeugs, Flugzeugs, Schienenfahrzeugs oder von Schiffen, gemäß dem Oberbegriff des Anspruchs 1.

Bei Kraftfahrzeugen sind Belüftungsdüsen insbesondere im Instrumentenbrett vorgesehen.

Aus der EP-A-0 672 551 ist hierzu eine Belüftungseinrichtung mit einem Diffuskörper bekannt, bei welchem eine Diffuskammer abgegrenzt ist mit einem so genannten Strömungskonzentrierungskanal, welche beide an einem Gitter münden. Ein Steuerelement kann die Diffusionskammer und den Strömungskonzentrierungskanal unabhängig voneinander schließen.

Des Weiteren ist aus der WO 01/66371 A ein Luftverteilungskanal bekannt, an dessen stromabwärts gelegenem Ende ein Luftdiffusionselement angeordnet ist, welches eine Vielzahl von Öffnungen aufweist.

Belüftungen von oben sind beispielsweise bei Flugzeugen in Form von Luftduschen, die in der Regel Kegeldüsen aufweisen, bekannt. Aus diesen Luftduschen kann temperierte Luft mit einem hohen Impuls durch die gewählte Luftmenge bei einer kleinen Austrittsfläche austreten.

Nachteilig bei den in Kraftfahrzeugen und Flugzeugen vorgesehenen Düsen ist, dass die relativ hohen Luftgeschwindigkeiten der austretenden Luft zu Zugerscheinungen führen kann.

In Großraumwagen, wie Zügen oder Straßenbahnen, sind in der Decke zumeist eine Vielzahl kleiner Öffnungen vorhanden, wobei der Dichteunterschied zwischen ausgeblasener Luft und Innenraumluft verwendet wird, um einen herabsinkenden Kälteschleier durch die austretende, von einer Klimaanlage gekühlte Luft zu erzeugen. Auf Grund der großen Ausblasfläche treten lediglich kleine Luftgeschwindigkeiten von unter 0,5 m/s auf, weshalb es nicht zu Zugerscheinungen kommt.

Nachteilig bei dieser Belüftungsvorrichtung mit einer Vielzahl kleiner Öffnungen ist, dass sich nicht die Fläche, sondern nur die Luftmenge der zugeführten Luft verändern lässt.

Es ist Aufgabe der Erfindung, eine verbesserte Belüftungsvorrichtung zur Verfügung zu stellen.

Diese Aufgabe wird gelöst durch eine Belüftungsvorrichturig mit den Merkmalen des Anspruchs 1. Vorteilhafte Ausgestaltungen sind Gegenstand der Unteransprüche.

Erfindungsgemäß ist eine Belüftungsvorrichtung vorgesehen, die einen Luftzuleitkanal aufweist, welcher nach einem einzigen Regelorgan in einzelne Segmente unterteilt ist. Eine derartige Belüftungsvorrichtung ermöglicht es, je nach Erfordernis, die benutzte Ausblasfläche näher oder entfernter zum jeweils beaufschlagten Insassen zu legen, im Wesentlichen ohne dass dabei ein störender Luftzug auftritt.

Bevorzugt sind durch das Regelorgan ein einzelnes, am Rande angeordnetes Segment, nebeneinander in einer Reihe angeordnete Segmente oder alle Segmente gleichzeitig freigebbar.

Die Reihenfolge der Luftbeaufschlagung der einzelnen Segmente erfolgt entweder vom Körper des Insassen weg oder zum Körper des Insassen hin. Hierbei ändert sich die Luftaustrittsgeschwindigkeit in Abhängigkeit der Gesamtfläche der freigegebenen Luftaustrittsöffnungen, sowie der Änderung des Gebläse-Betriebspunktes.

Die Luftaustrittsöffnungen sind vorzugsweise hinter einer luftdurchlässigen Verkleidung angeordnet, welche bspw. durch einen textilen Stoff o.ä. gebildet wird.

Die Dichte und/oder Größe der Luftaustrittsöffnungen einzelner Sektoren ist unterschiedlich ausgebildet, so dass eine optimale Luftverteilung in den Fahrzeuginnenraum möglich ist. Die Dichte und Größe der Luftaustrittsöffnungen ist bevorzugt abhängig vom Abstand vom Körper des Insassen. Auch innerhalb eines Segments können die Dichte und/oder Größe der Luftaustrittsöffnungen variieren. Bevorzugt sind sämtliche Luftaustrittsöffnungen in einem gemeinsamen Bereich ausgebildet, d.h. es sind keine trennenden, von Luftaustrittsöffnungen freien Bereiche zwischen den Luftaustrittsöffnungen einzelner Segmente vorgesehen.

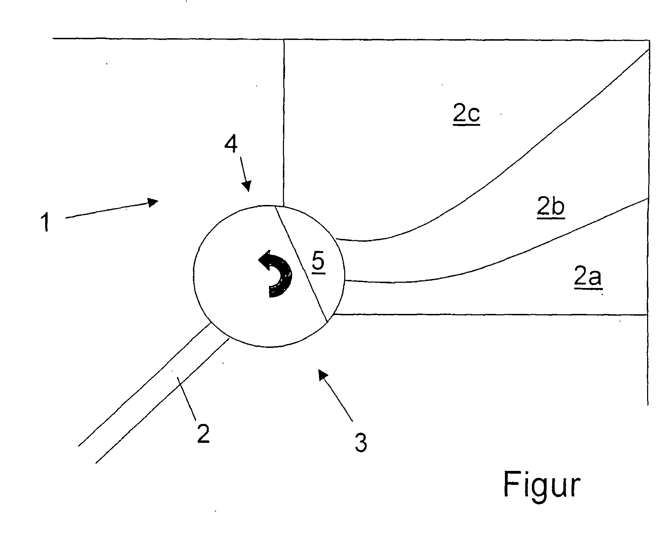

Im Folgenden wird die Erfindung anhand eines Ausführungsbeispiels unter Bezugnahme auf die Zeichnung im Einzelnen erläutert. Die einzige Figur der Zeichnung zeigt eine schematische Ansicht einer erfindungsgemäßen Belüftungsvorrichtung.

Eine Belüftungsvorrichtung 1 ist im Fahrzeughimmel eines Kraftfahrzeugs angeordnet. Die Belüftungsvorrichtung 1 weist einen Luftzuleitkanal 2, der von der Klimaanlage des Fahrzeuges kommt, ein Regelorgan 3, welches die zugeführte Luft dosiert und verteilt, drei Segmente 2a, 2b, 2c, die in Luftströmungsrichtung gesehen nach dem Regelorgan 3 angeordnet sind, und eine Vielzahl von kleinen Luftaustrittsöffnungen (nicht dargestellt), durch die die Luft in den Fahrzeuginnenraum austreten kann.

Das Regelorgan 3 ist derart ausgebildet, dass es eine drehbares Verteilerventil 4 mit einem kreissegmentartigen Verschlusselement 5 aufweist, das in einer seiner Stellungen alle drei Segmente 2a, 2b, 2c verschließt und derart verstellbar ist, dass Zwischenstellungen einnehmbar sind, wobei nur solche Zwischenstellungen möglich sind, bei denen benachbarte Segmente offen bzw. verschlossen sind. Das Regelorgan 3 kann aber auch einen Schieber oder einen Kolben umfassen, wobei die Verteilung dann über eine translatorische Bewegung erfolgt.

Die einzelnen Segmente 2a, 2b, 2c sind auch in Hinblick auf ihr Luftaustrittsöffnungen entsprechend angeordnet, so dass nur durch in einem gemeinsamen, ununterbrochenen Bereich liegende Luftaustrittsöffnungen Luft in den Fahrzeuginnenraum gelangt. Dabei erfolgt, ausgehend von einem geschlossenen Regelorgan 3, die Luftbeaufschlagung bevorzugt auf den Körper des Insassen zu oder von diesem weg. Das Regelorgan 3 kann prinzipiell auch so ausgebildet sein, dass nur ein Drehen in einer Richtung möglich ist. Dabei ist das Regelorgan 3 in Hinblick auf die einzelnen Segmente 2a, 2b, 2c derart ausgestaltet, dass die Strömungsgeschwindigkeit mit dem Öffnen weiterer Segmente 2a, 2b, 3c abnimmt, bis alle drei Segmente 2a, 2b, 2c geöffnet werden, so dass keine unerwünschten Zugerscheinungen im Bereich des Körpers des Insassen auftreten. Die örtliche Einstellbarkeit bleibt dennoch erhalten.

## Patentansprüche

1. Belüftungsvorrichtung, insbesondere zur Belüftung eines Fahrzeuginnenraums, mit einem Luftzuleitkanal (2) und einer Vielzahl von kleinen Luftaustrittsöffnungen, wobei der Luftzuleitkanal (2) in eine Mehrzahl einzelner Segmente (2a, 2b, 2c) unterteilt ist, **dadurch gekennzeichnet, dass** die Dichte und/oder Größe der Luftaustrittsöffnungen einzelner Segmente (2a, 2b, 2c) unterschiedlich ausgebildet sind.

2. Belüftungsvorrichtung nach Anspruch 1, **dadurch gekennzeichnet, dass** die Segmente (2a, 2b, 2c) des Luftzuleitkanals (2) ein gemeinsames Regelorgan (3) aufweisen.

3. Belüftungsvorrichtung nach Anspruch 1 oder 2, **dadurch gekennzeichnet, dass** durch das Regelorgan (3) ein einzelnes, am Rande angeordnetes Segment (2a oder 2c), nebeneinander in einer Reihe angeordnete Segmente (2a und 2b oder 2b und 2c) oder alle Segmente (2a, 2b, 2c) gleichzeitig freigebbar sind.

4. Belüftungsvorrichtung nach einem der vorhergehenden Ansprüche, **dadurch gekennzeichnet, dass** die Reihenfolge der Luftbeaufschlagung der einzelnen Segmente (2a, 2b, 2c) vom Körper des Insassen weg oder zum Körper des Insassen hin erfolgt.

5. Belüftungsvorrichtung nach einem der vorhergehenden Ansprüche, **dadurch gekennzeichnet, dass** die Luftaustrittsöffnungen hinter einer luftdurchlässigen Verkleidung angeordnet sind.

6. Belüftungsvorrichtung nach einem der vorhergehenden Ansprüche, **dadurch gekennzeichnet, dass** die Dichte und/oder Größe der Luftaustrittsöffnungen innerhalb einzelner Segmente (2a, 2b, 2c) unterschiedlich ausgebildet sind.

7. Belüftungsvorrichtung nach einem der vorhergehenden Ansprüche, **dadurch gekennzeichnet, dass** das Regelorgan (3) ein drehbares Verteilerventil (4) aufweist.

8. Belüftungsvorrichtung nach Anspruch 7, **dadurch gekennzeichnet, dass** das Verteilerventil (4) ein kreissegmentartiges Verschlusselement (5) aufweist.

9. Belüftungsvorrichtung nach einem der vorhergehenden Ansprüche, **dadurch gekennzeichnet, dass** das Regelorgan (3) einen Schieber oder einen Kolben aufweist und die Verteilung über eine translatorische Bewegung erfolgt.

10. Belüftungsvorrichtung nach einem der vorhergehenden Ansprüche, **dadurch gekennzeichnet, dass** die Luftaustrittsöffnungen der einzelnen Segmente (2a, 2b, 2c) in einem geschlossenen Bereich ausgebildet sind.

## Claims

1. A ventilating device, in particular for ventilating a motor vehicle interior, having an air intake duct (2) and a plurality of small air outlet openings, the air intake duct (2) being divided into a number of individual segments (2a, 2b, 2c),
**characterised in that**
the density and/or size of the air outlet openings in the individual segments (2a, 2b, 2c) are different.

2. A ventilating device in accordance with claim 1,
**characterised in that**
the segments (2a, 2b, 2c) of the air intake duct (2) have a common regulating device (3).

3. A ventilating device in accordance with claim 1 or 2,
**characterised in that**
the regulating device (3) is able to release one of the edge segments (2a or 2c), consecutive segments (2a and 2b or 2b and 2c) or all the segments (2a, 2b, 2c) simultaneously.

4. A ventilating device in accordance with one of the preceding claims,
**characterised in that**
air is applied to the individual segments (2a, 2b, 2c) in a sequence which either moves away from the passenger or towards the passenger.

5. A ventilating device in accordance with one of the preceding claims,
**characterised in that**
the air outlet openings are positioned behind an air-permeable moulding.

6. A ventilating device in accordance with one of the preceding claims,
**characterised in that**
the density and/or size of the air outlet openings in the individual segments (2a, 2b, 2c) are different.

7. A ventilating device in accordance with one of the preceding claims,
**characterised in that**
the regulating device (3) has a rotating distribution valve (4).

8. A ventilating device in accordance with claim 7,
**characterised in that**
the distribution valve (4) has a closing element (5) in the shape of a segment of a circle.

9. A ventilating device in accordance with one of the preceding claims,
**characterised in that**
the regulating device (3) has a slide or a piston, and the air is distributed by means of a translatory movement.

10. A ventilating device in accordance with one of the preceding claims,
**characterised in that**
the air outlet openings in the individual segments (2a, 2b, 2c) are located in a closed area.

## Revendications

1. Dispositif de ventilation, en particulier pour la ventilation de l'habitacle d'un véhicule, comprenant un conduit d'arrivée d'air (2) et une multiplicité de petites ouvertures de sortie d'air, où le conduit d'arrivée d'air (2) est subdivisé en une pluralité de segments individuels (2a, 2b, 2c), **caractérisé en ce que** la densité et/ou la dimension des ouvertures de sortie d'air des segments individuels (2a, 2b, 2c) sont conçues de manière différente.

2. Dispositif de ventilation selon la revendication 1, **caractérisé en ce que** les segments (2a, 2b, 2c) du conduit d'arrivée d'air (2) présentent un organe de réglage (3) commun.

3. Dispositif de ventilation selon la revendication 1 ou 2, **caractérisé en ce qu'**un segment individuel (2a ou 2c) disposé au bord, des segments (2a et 2b ou 2b et 2c) disposés les uns à côté des autres dans une rangée, ou bien tous les segments (2a, 2b, 2c), peuvent être libérés en même temps par l'organe de réglage (3).

4. Dispositif de ventilation selon l'une quelconque des revendications précédentes, **caractérisé en ce que** l'alimentation d'air des segments individuels (2a, 2b, 2c) se produit successivement en s'éloignant du corps du passager ou bien en se dirigeant vers le corps du passager.

5. Dispositif de ventilation selon l'une quelconque des revendications précédentes, **caractérisé en ce que** les ouvertures de sortie d'air sont disposées derrière un revêtement perméable à l'air.

6. Dispositif de ventilation selon l'une quelconque des revendications précédentes, **caractérisé en ce que** la densité et/ou la dimension des ouvertures de sortie d'air, à l'intérieur des segments individuels (2a, 2b, 2c), sont conçues de manière différente.

7. Dispositif de ventilation selon l'une quelconque des revendications précédentes, **caractérisé en ce que** l'organe de réglage (3) présente une vanne de répartition rotative (4).

8. Dispositif de ventilation selon la revendication 7, **caractérisé en ce que** la vanne de répartition (4) présente un élément d'obturation (5) en forme de segment de cercle.

9. Dispositif de ventilation selon l'une quelconque des revendications précédentes, **caractérisé en ce que** l'organe de réglage (3) présente un tiroir ou un piston, et la répartition se produit par un mouvement de translation.

10. Dispositif de ventilation selon l'une quelconque des revendications précédentes, **caractérisé en ce que** les ouvertures de sortie d'air des segments individuels (2a, 2b, 2c) sont configurées dans une zone fermée.
